# EUROPEAN PATENT APPLICATION

(11) **EP 4 768 318 A1**
(43) Date of publication of application: **01.07.2026**
(21) Application number: 25225829.8
(22) Date of filing: 19.12.2025
(51) Int. Cl.: B60L 53/30, B60L 53/16, B60L 53/18

(54) **CHARGING DEVICE**

(30) Priority: 27.12.2024 CN 202423258061 U
(71) Applicant: Huawei Technologies Co., Ltd., Shenzhen, Guangdong 518129 (CN)
(72) Inventor: LIAN, Zhisheng, Shenzhen, 518129 (CN); HE, Yuanning, Shenzhen, 518129 (CN); ZHANG, Xiaoyi, Shenzhen, 518129 (CN)
(74) Representative: Epping - Hermann - Fischer

(57) **Abstract**

Embodiments of this application relate to the field of electric vehicle charging technologies, and provide a charging device. The charging device includes a device cabinet, a first cabinet door, a display, a first switch component, a charging connector, and a first cable. The device cabinet includes a first side wall and a second side wall. The first cabinet door is located between the first side wall and the second side wall and is connected to the first side wall or the second side wall. The first cabinet door is movable relative to the device cabinet, and the first cabinet door is configured to open or block the device cabinet. The display is fastened to the first side wall, and a display area of the display is exposed outside the device cabinet. The first switch component is located in the device cabinet and is fastened to the second side wall, and an input end of the first switch component is configured to electrically connect to a power supply. The charging connector is located outside the device cabinet and is configured to connect to a to-be-charged device. One part of the first cable is located in the device cabinet and is electrically connected to an output end of the first switch component, and the other part of the first cable is located outside the device cabinet and is electrically connected to the charging connector.

## Description

### TECHNICAL FIELD

This application relates to the field of electric vehicle charging technologies, and in particular, to a charging device.

### BACKGROUND

With development of electric vehicles, construction of charging facilities matching the electric vehicles also emerges. The charging devices (for example, charging piles) can provide charging services for the electric vehicles, and therefore a large quantity of charging devices are mounted in charging stations. In a related technology, a power distribution apparatus in a charging device needs to be connected to a plurality of cables. In addition, a display of the charging device also needs to be connected to a plurality of conducting wires. To avoid interference between the conducting wires connected to the display and the cables connected to the power distribution apparatus, a spacing between positions of the display and the power distribution apparatus in a device cabinet (a cabinet of the charging device) is usually large. For example, the power distribution apparatus is disposed on a backplane of the device cabinet, and the display is usually located on a front side of the device cabinet, to fully use internal space of the device cabinet. In addition, a maintenance door of the charging device is usually located on the front side of the device cabinet, to help a person maintain an apparatus (for example, the power distribution apparatus) in the device cabinet. Therefore, the display is usually disposed on the maintenance door.

However, some conducting wires connected to the display need to be connected to another apparatus in the charging device. When the power distribution apparatus needs to be maintained, after the maintenance door is opened, the display is moved together with the maintenance door, and a large quantity of conducting wires connected to the display are pulled out. This increases difficulty in maintaining by the person.

### SUMMARY

This application provides a charging device, to facilitate maintenance of an interior of a device cabinet of the charging device by a person.

To achieve the foregoing objectives, the following technical solutions are used in this application.

This application provides a charging device. The charging device includes a device cabinet, a first cabinet door, a display, a first switch component, a charging connector, and a first cable. The device cabinet includes a first side wall and a second side wall that are disposed opposite to each other. The first cabinet door is connected to the first side wall or the second side wall. The display is fastened to the first side wall, and a display area of the display is exposed outside the device cabinet. The first switch component is located in the device cabinet and is fastened to the second side wall. An input end of the first switch component is configured to electrically connect to a power supply. The charging connector is located outside the device cabinet and is configured to connect to a to-be-charged device. The second side wall has a cable outlet hole through which the first cable passes. One part of the first cable is located in the device cabinet and is electrically connected to an output end of the first switch component. The other part of the first cable is located outside the device cabinet and is electrically connected to the charging connector.

The display is fastened to the first side wall. After the device cabinet is mounted, the display may face a person, so that the person can observe content on the display. The first switch component is located in the device cabinet and is fastened to the second side wall of the device cabinet. The input end of the first switch component is connected to the power supply (for example, a power grid). A current provided by the power supply is input to the first switch component through the input end of the first switch component after power conversion. When the first switch component is turned on, the first switch component allows the current to be output from the output end of the first switch component. The current output from the output end of the first switch component is transmitted to the charging connector through the first cable, and then is used for charging a to-be-charged device (for example, an electric vehicle) through the charging connector.

The first cabinet door serving as a maintenance door is located on a side of the device cabinet. The display is not disposed on the first cabinet door, but the display is mounted on the device cabinet. When a component in the device cabinet needs to be maintained, a position of the display does not change (the display does not move with the first cabinet door) in a process of opening the first cabinet door. In this way, a conducting wire connected to the display is not pulled out due to movement of the first cabinet door, and difficulty in maintaining in the device cabinet by the person is reduced. In addition, in this application, the power distribution apparatus (including the first switch component) and the display in the device cabinet are located on different sides of the first cabinet door. After the first cabinet door is opened, the display can be maintained on a side facing the first side wall, and the first switch component can be maintained on a side facing the second side wall. This improves efficiency in maintenance by the person.

In an embodiment of this application, the charging device further includes a cooling apparatus, the cooling apparatus is located in the device cabinet, the cooling apparatus includes a heat exchanger and a heat exchange fan, the first cable has a heat dissipation channel, a heat exchange channel of the heat exchanger communicates with the heat dissipation channel, and the heat exchange fan is located on a side that is of the heat exchanger and that faces the first cabinet door. The first cabinet door is provided with a first air vent, and the first air vent faces the heat exchange fan. A cooling medium is introduced into the heat dissipation channel and the heat exchange channel of the heat exchanger, so that the cooling medium flows between the heat dissipation channel and the heat exchange channel of the heat exchanger. The cooling medium in the heat dissipation channel can cool the first cable. After absorbing heat of the first cable in the heat dissipation channel, the cooling medium flows into the heat exchange channel of the heat exchanger. Under an action of the heat exchange fan, the cooling medium exchanges heat with air through the heat exchanger. A temperature of the cooling medium decreases after heat exchange in the heat exchanger, and then the cooling medium flows back into the heat dissipation channel to cool the first cable.

Because the heat exchange fan is located on the side that is of the heat exchanger and that faces the first cabinet door, that is, the heat exchanger is located on a side that is of the heat exchange fan and that is away from the first cabinet door, the heat exchanger is far away from the first cabinet door. In a process of opening the first cabinet door to maintain a component in the device cabinet, because the heat exchanger is far away from the first cabinet door, a possibility of damage to the heat exchanger is reduced under protection of the heat exchange fan.

In an embodiment of this application, the charging device further includes a second cable. One part of the second cable is located outside the device cabinet and is configured to electrically connect to a power supply. The other part of the second cable is located in the device cabinet and is electrically connected to the input end of the first switch component. At least a part that is of the second cable and that is in the device cabinet is located on a side that is of the heat exchange fan and that faces the first cabinet door.

The second cable transmits current from the power supply to the input end of the first switch component, and transmits the current to the charging connector through the output end of the first switch component, so that the to-be-charged device can be charged through the charging connector. A segment of the part that is of the second cable and that is in the device cabinet is located on a side that is of the heat exchange fan and that faces the first cabinet door. In other words, at least a segment of the part that is of the second cable and that is in the device cabinet is closer to the first cabinet door. After the first cabinet door is opened, it is convenient for the person to mount, disassemble, or maintain the second cable.

In an embodiment of this application, the charging device further includes a second cabinet door. The second cabinet door is disposed opposite to the first cabinet door. The second cabinet door is connected to the first side wall or the second side wall. The heat exchanger is located on the side that is of the heat exchange fan and that faces the second cabinet door. The second cabinet door is provided with a second air vent, and the second air vent faces the heat exchanger.

Because the heat exchanger is located on the side that is of the heat exchange fan and that faces the second cabinet door, that is, the heat exchanger is close to the second cabinet door, when the heat exchanger needs to be maintained, the second cabinet door may be opened, so that the heat exchanger is exposed, to facilitate maintenance of the heat exchanger by the person. In addition, the first air vent on the first cabinet door and the second air vent on the second cabinet door help the heat exchanger exchange heat with air.

In an embodiment of this application, the charging device further includes a partition plate. The partition plate is fastened in the device cabinet, and the partition plate divides internal space of the device cabinet into a first chamber and a second chamber. The first switch component is located in the first chamber, and the heat exchanger and the heat exchange fan are located in the second chamber. The cooling apparatus further includes a liquid inlet pipe and a liquid outlet pipe. Both the liquid inlet pipe and the liquid outlet pipe pass through the partition plate. A part that is of the liquid inlet pipe and that is located in the first chamber and a part that is of the liquid outlet pipe and that is located in the first chamber are both connected to the heat dissipation channel. A part that is of the liquid inlet pipe and that is located in the second chamber and a part that is of the liquid outlet pipe and that is located in the second chamber are both connected to the heat exchange channel of the heat exchanger.

The internal space of the device cabinet is partitioned through the partition plate, so that the cooling apparatus and the power distribution apparatus (including the first switch component) in the device cabinet are separated from each other. This implements water-electricity isolation, reduces a possibility that liquid splashes to the power distribution apparatus when liquid in the cooling apparatus leaks (for example, the cooling medium leaks), and reduces a safety hazard. In addition, the heat dissipation channel communicates with the heat exchange channel of the heat exchanger through the liquid inlet pipe and the liquid outlet pipe, so that the cooling medium flows between the heat dissipation channel and the heat exchange channel of the heat exchanger.

In an embodiment of this application, the first switch component is located above the heat exchanger and the heat exchange fan.

The power distribution apparatus (including the first switch component) in the device cabinet is disposed above the cooling apparatus. In this way, when a natural disaster like a flood occurs, a risk of a short circuit of the power distribution apparatus can be delayed. In addition, a possibility that liquid splashes to the power distribution apparatus when the liquid in the cooling apparatus leaks (for example, the cooling medium leaks) is reduced, and a service life of the power distribution apparatus is prolonged.

In an embodiment of this application, the charging device further includes a control apparatus. The control apparatus includes a circuit board and a plurality of electronic components. The circuit board is fastened in the device cabinet, the circuit board is located on a side that is of the first switch component and that is away from the first cabinet door. One board surface of the circuit board faces the first cabinet door. The plurality of electronic components are fastened to the board surface that is of the circuit board and that faces the first cabinet door.

The circuit board is disposed on the side that is of the first switch component and that is away from the first cabinet door. In this way, interference caused by the circuit board to maintenance of the first switch component is reduced when the first switch component needs to be maintained. In addition, because the circuit board is far away from the first cabinet door, in a process of opening the first cabinet door to maintain another apparatus (an apparatus other than the control apparatus) in the device cabinet, a possibility of damage to the circuit board can be reduced, and the circuit board is protected. In addition, the plurality of electronic components (including a control chip) on the circuit board are fastened to the side that is of the circuit board and that faces the first cabinet door. In this way, when the control apparatus needs to be maintained, after the first cabinet door is opened, the plurality of electronic components on the circuit board face the person, and the person maintains the circuit board and the electronic components on the circuit board.

In an embodiment of this application, the charging device further includes a power supply apparatus. The power supply apparatus is electrically connected to the power supply and the circuit board. The power supply apparatus is configured to perform power conversion on electric energy input by the power supply, and output converted electric energy to the circuit board to supply power to the circuit board. The power supply apparatus is located in the device cabinet and is connected to the first side wall. The power supply apparatus is slidable relative to the first side wall in a direction close to or away from the first cabinet door.

The power supply apparatus is an auxiliary power supply. The power supply apparatus is set to be slidable relative to the device cabinet, to facilitate mounting and disassembly of the power supply apparatus. In a process of pulling the power supply apparatus, the power supply apparatus slides in the direction close to or away from the first cabinet door. After the first cabinet door is opened, the internal space of the device cabinet communicates with external space. The person pulls the power supply apparatus outward, and gradually pulls the power supply apparatus out of the device cabinet, to disassemble the power supply apparatus. When the power supply apparatus needs to be mounted, the power supply apparatus is pushed toward the inside of the device cabinet. After the power supply apparatus is located in the device cabinet, the power supply apparatus is continuously pushed toward the inside of the device cabinet in the direction away from the first cabinet door, to mount the power supply apparatus.

In addition, because the first switch component on the second side wall needs to connect to a cable, in this application, the power supply apparatus is disposed on the first side wall, so that the power supply apparatus is slidable relative to the first side wall. In this way, the power supply apparatus can be disassembled and assembled, and impact of the power supply apparatus on wiring of the first switch component is reduced, so that an internal layout of the device cabinet is more appropriate.

In an embodiment of this application, the charging device further includes a second switch component and a first mounting base. An input end of the second switch component is configured to electrically connect to the power supply, and an output end of the second switch component is electrically connected to the power supply apparatus. The circuit board and the second switch component are both fastened to the first mounting base. The first mounting base is fastened to the device cabinet, and the first mounting base is located on the side that is of the first switch component and that is away from the first cabinet door.

The second switch component (for example, a circuit breaker or a contactor) is a power distribution component of the power supply apparatus. The second switch component can control connection and disconnection of a circuit between the power supply apparatus and the power supply. The second switch component and the circuit board are fastened to the first mounting base, to implement integration of the control apparatus and the second switch component. This facilitates integral mounting of the integrated control apparatus and second switch component. For example, the control apparatus and the second switch component are first fastened to the first mounting base, and then the first mounting base is integrally fastened to the device cabinet, together with the control apparatus and the second switch component. This improves production efficiency of the charging device.

In an embodiment of this application, the charging device further includes a connector holder. The connector holder is fastened to the first side wall, and the connector holder and the display are arranged in a vertical direction. The connector holder is used for insertion of the charging connector.

The connector holder is fastened to the first side wall. When the first cabinet door is opened, the connector holder and the charging connector disposed on the connector holder do not move with movement of the first cabinet door. In addition, the connector holder and the display are distributed in the vertical direction, to narrow a width of the device cabinet and reduce an area occupied by the device cabinet.

In an embodiment of this application, the charging device further includes a card reading apparatus. The card reading apparatus is fastened to the first side wall, and the card reading apparatus is exposed outside the device cabinet. The card reading apparatus and the display are arranged in the vertical direction.

The card reading apparatus is configured to identify an integrated circuit card (Integrated Circuit Card, IC card), so that the charging device can identify an IC card (a bank card, a charging card, or the like) of the user through the card reading apparatus, and perform corresponding charging and fee deduction. The card reading apparatus and the display are distributed in the vertical direction, to narrow the width of the device cabinet and reduce the area occupied by the device cabinet.

In an embodiment of this application, the charging device further includes a second mounting base, an input metal busbar, and an output metal busbar. The second mounting base is fastened to the second side wall. The first switch component, the input metal busbar, and the output metal busbar are all fastened to the second mounting base. The input end of the first switch component is connected to the power supply through the input metal busbar. The output metal busbar is connected to the output end of the first switch component. The part that is of the first cable and that is located in the device cabinet is connected to the output metal busbar.

The first switch component, the input metal busbar, and the output metal busbar are all fastened to the second mounting base, so that integration of the power distribution apparatus (including the first switch component, the input metal busbar, and the output metal busbar) in the device cabinet is higher, to facilitate integral mounting, integral disassembly, and integral replacement of the power distribution apparatus, so as to greatly improve mounting efficiency of the charging device (for example, the power distribution apparatus is first mounted, and then the mounted power distribution apparatus is integrally mounted in the device cabinet) and subsequent maintenance efficiency.

In an embodiment of this application, the charging device further includes an electricity meter. The electricity meter is located in the device cabinet and is fastened to the first cabinet door. The first cabinet door has a window, and a display area of the electricity meter is exposed outside the device cabinet through the window.

The electricity meter can detect a current flowing through the input end of the first switch component or a current flowing through the output end of the first switch component, to meter a charge amount of the charging device. Because the display area of the electricity meter is exposed outside the device cabinet through the window, it is convenient for the person to observe a value of the electricity meter. In addition, because the first cabinet door on which the electricity meter is located is adjacent to the first side wall on which the display is located, the display of the electricity meter is exposed outside the device cabinet through the first cabinet door, and it is also convenient for the person to compare data displayed on the display and the electricity meter.

In an embodiment of this application, the charging device further includes a functional member. The functional member includes at least one of a heating apparatus, a mixed-flow fan, or an emergency stop button. The functional member is located in the device cabinet and is fastened to the first cabinet door. The heating apparatus is configured to heat the internal space of the device cabinet. The mixed-flow fan is configured to blow air into the device cabinet. The emergency stop button is configured to control the first switch component to disconnect a circuit between the power supply and the charging connector.

At least one of the heating apparatus, the mixed-flow fan, or the emergency stop button is disposed on the first cabinet door. After the first cabinet door is opened, the functional member (the heating apparatus, the mixed-flow fan, or the emergency stop button) on the first cabinet door is exposed, so that the person can maintain the functional member. After the first cabinet door is opened, an apparatus on the first cabinet door inevitably collides with the person or a maintenance tool. The heating apparatus, the mixed-flow fan, or the emergency stop button is an apparatus that is not easy to be damaged. The functional member is disposed on the first cabinet door, so that there is more space on the first side wall and the second side wall for mounting an apparatus that is easily damaged (for example, the circuit board or the electronic component). After the first cabinet door is opened, some apparatuses that are not easily damaged (for example, the functional member) are exposed with the first cabinet door, and some apparatuses that are easily damaged are still located in the device cabinet. In this way, a layout of the apparatus inside the device cabinet is more appropriate, and an overall service life of the charging device is prolonged.

In an embodiment of this application, the charging device further includes a baffle plate. The baffle plate is fastened to the first cabinet door. The baffle plate extends toward the internal space of the device cabinet, and the baffle plate is located above the functional member.

After the first cabinet door is opened, the baffle plate can block and intercept liquid dripping from the top of the first cabinet door to some extent. This reduces a possibility of a short circuit between a plurality of apparatuses on the first cabinet door caused by liquid dripping from the top of the first cabinet door.

### BRIEF DESCRIPTION OF DRAWINGS

FIG. 1 is a diagram of a structure of a charging device according to an embodiment of this application;
FIG. 2 is a diagram of a structure of another charging device according to an embodiment of this application;
FIG. 3 is a diagram of a partial structure of a charging device according to an embodiment of this application;
FIG. 4 is a diagram of an internal structure of a charging device from a first perspective according to an embodiment of this application;
FIG. 5 is a diagram of an internal structure of a charging device from a second perspective according to an embodiment of this application;
FIG. 6 is a diagram of a structure of a heat dissipation channel according to an embodiment of this application;
FIG. 7 is a diagram of an internal structure of a charging device from a third perspective according to an embodiment of this application;
FIG. 8 is a sectional view of the charging device in FIG. 7 at A-A;
FIG. 9 is a diagram of structure of a second opening according to an embodiment of this application;
FIG. 10 is a diagram of four directions of airflow that exchanges heat with a heat exchanger according to an embodiment of this application;
FIG. 11 is an example diagram of two positions of a connector holder according to an embodiment of this application; and
FIG. 12 is a diagram of a structure of a connector cable management apparatus according to an embodiment of this application.

### Reference numerals:

100: charging device; 1: device cabinet; 11: first opening; 12: first side wall; 121: display; 122: card reading apparatus; 1221: radio frequency identification card reader; 1222: point of sale terminal; 123: mounting plate; 124: connector holder; 1241: return switch; 125: power supply apparatus; 126: mounting housing; 1261: mounting opening; 13: second side wall; 131: cable outlet hole; 14: first cabinet door; 141: first air vent; 142: electricity meter; 1421: window; 143: mixed-flow fan; 1431: first mixed-flow fan; 1432: second mixed-flow fan; 144: emergency stop button; 145: heating apparatus; 146: baffle plate; 147: functional member; 15: second opening; 16: second cabinet door; 161: second air vent; 17: partition plate; 171: first chamber; 172: second chamber; 18: first mounting base; 181: control apparatus; 1811: circuit board; 1812: electronic component; 1813: control chip; 182: second switch component; 19: display light; 2: power conversion apparatus; 3: alternating current power distribution apparatus; 4: first direct current power distribution apparatus; 41: first switch component; 42: input metal busbar; 43: output metal busbar; 44: protection component; 45: second mounting base; 46: shunt; 5: basic cabinet; 6: second direct current power distribution apparatus; 7: second cable; 8: charging connector; 9: first cable; 91: heat dissipation channel; 92: protective sleeve; 93: positive cable; 94: negative cable; 10: cooling apparatus; 101: heat exchanger; 1011: heat exchange channel; 102: heat exchange fan; 1021: first heat exchange fan; 1022: second heat exchange fan; 103: drive pump; 104: liquid inlet pipe; 105: liquid outlet pipe; 106: expansion water tank; 107: liquid level temperature sensor; 110: water immersion sensor; 120: connector cable management apparatus; and 200: power supply.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

In this application, unless otherwise expressly specified and limited, orientations or position relationships indicated by terms such as "up", "down", "front", "back", "left", and "right" may include but are not limited to be defined with respect to orientations of components schematically placed in the accompanying drawings. These directional terms may be relative concepts, may be used for relative description and clarification, and may vary correspondingly based on changes of the placement orientations of the components in the accompanying drawings. Such terms cannot be understood as a limitation on this application.

In this application, the terms "first", "second", and the like are merely intended for a purpose of description, and are intended to distinguish between one element and another element, but shall be understood as an indication or implication of relative importance or implicit indication of a quantity of indicated technical features. Therefore, a feature limited by "first", "second", or the like may explicitly or implicitly include one or more features.

In this application, unless otherwise clearly specified and limited, "a plurality of" means two or more.

In addition, in this application, the terms such as "example" or "for example" indicate giving an example, an illustration, or a description. Any embodiment or design scheme described as an "example" or "for example" in this application should not be construed as being more preferred or having more advantages than another embodiment or design scheme. Exactly, use of the word like "example" or "for example" is intended to present a related concept in a specific manner.

In the accompanying drawings of embodiments of this application, entity structures such as components and assemblies are represented by guide lines. A structure including a plurality of components is represented by parentheses or guide lines with solid arrows. Hollow structures such as openings, holes, spaces, and chambers are represented by guide lines with hollow arrows.

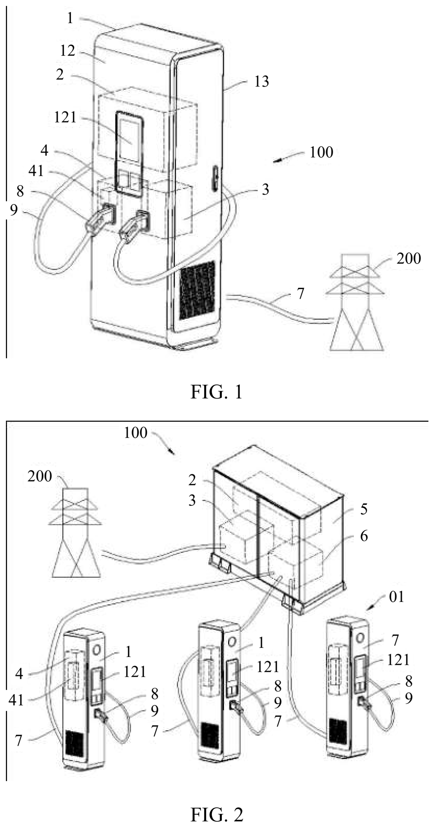

Embodiments of this application provide a charging device 100. FIG. 1 shows an example of a structure of the charging device 100. Refer to FIG. 1. The charging device 100 is an integrated charging pile. The charging device 100 includes a device cabinet 1, a power conversion apparatus 2, an alternating current power distribution apparatus 3, and a first direct current power distribution apparatus 4. The power conversion apparatus 2, the alternating current power distribution apparatus 3, and the first direct current power distribution apparatus 4 are all mounted in the device cabinet 1.

An input end of the alternating current power distribution apparatus 3 is configured to connect to a power supply 200. The power supply 200 may be a power grid. An output end of the alternating current power distribution apparatus 3 is connected to an input end of the power conversion apparatus 2. The power conversion apparatus 2 is configured to: convert, into a direct current, an alternating current input by the power supply 200 through the alternating current power distribution apparatus 3, and output the direct current. An output end of the power conversion apparatus 2 is connected to an input end of the first direct current power distribution apparatus 4.

In addition, refer to FIG. 1. The charging device 100 further includes a charging connector 8 (for example, a charger) and a first cable 9 (for example, a charger cable). The charging connector 8 is located outside a cabinet body, and the charging connector 8 is configured to connect to a to-be-charged device (for example, an electric vehicle). The charging connector 8 is connected to the first direct current power distribution apparatus 4 through the first cable 9. The first direct current power distribution apparatus 4 includes a first switch component 41 (for example, an air switch, a relay, or a contactor). The output end of the power conversion apparatus 2 is electrically connected to an input end of the first switch component 41, and an output end of the first switch component 41 is electrically connected to the first cable 9. When the first switch component 41 connects a circuit between the output end of the power conversion apparatus 2 and the first cable 9, power output by the power conversion apparatus 2 can be transmitted to the charging connector 8 through the first cable 9. When the first switch component 41 disconnects the circuit between the output end of the power conversion apparatus 2 and the first cable 9, the charging connector 8 cannot invoke the power output by the power conversion apparatus 2.

FIG. 2 shows an example of a structure of another charging device 100. Refer to FIG. 2. The charging device 100 is a split-type charging pile. The charging device 100 includes a main body part and a plurality of terminal parts. The main body part of the charging device 100 includes a basic cabinet 5, a power conversion apparatus 2, an alternating current power distribution apparatus 3, and a second direct current power distribution apparatus 6. The power conversion apparatus 2, the alternating current power distribution apparatus 3, and the second direct current power distribution apparatus 6 are all mounted in the basic cabinet 5. An input end of the alternating current power distribution apparatus 3 is configured to connect to a power supply 200 (for example, a power grid). The power conversion apparatus 2 is configured to: convert, into a direct current, an alternating current input by the power supply 200 through the alternating current power distribution apparatus 3, and output the direct current. The second direct current power distribution apparatus 6 may distribute the direct current output by the power conversion apparatus 2 to one or more of the terminal parts.

Each terminal part of the charging device 100 includes a device cabinet 1, a first direct current power distribution apparatus 4, a charging connector 8, and a first cable 9. The first direct current power distribution apparatus 4 is mounted in the device cabinet 1, and the charging connector 8 is located outside the device cabinet 1. The first direct current power distribution apparatus 4 includes a first switch component 41. An input end of the first switch component 41 is electrically connected to the second direct current power distribution apparatus 6, and an output end of the first switch component 41 is electrically connected to the charging connector 8 through the first cable 9. In this way, the charging connector 8 can output a current (the current is from the power supply 200) obtained by performing power conversion by the power conversion apparatus 2.

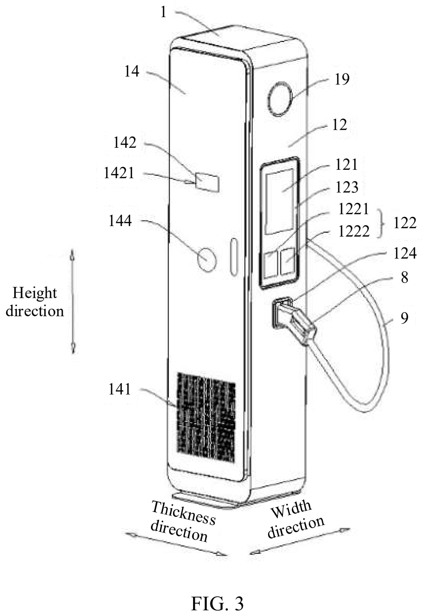

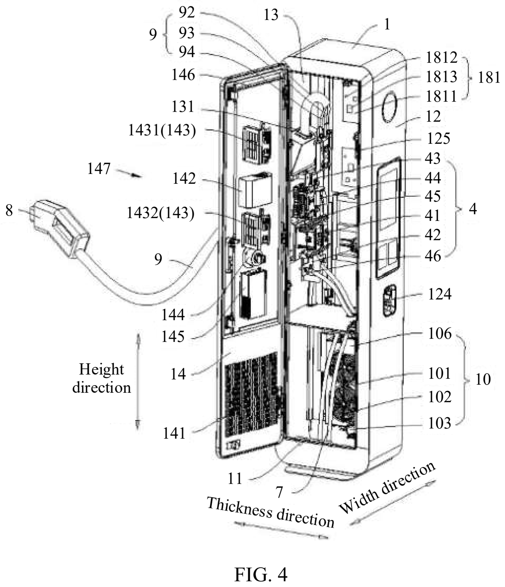

The charging device 100 in FIG. 2 is used as an example. FIG. 3 shows an example of a partial structure (the terminal part of the charging device 100) of the charging device 100 in FIG. 2. FIG. 4 shows an example of an internal structure of the charging device 100 in FIG. 3. Refer to FIG. 3 and FIG. 4. The charging device 100 includes the device cabinet 1 and a first cabinet door 14. The device cabinet 1 has a first opening 11 (a maintenance opening) that communicates with internal space of the device cabinet 1. Walls that are of the device cabinet 1 and that are used for enclosing the internal space of the device cabinet 1 include a first side wall 12 and a second side wall 13. The first side wall 12 and the second side wall 13 are disposed opposite to each other, and the first opening 11 is located between the first side wall 12 and the second side wall 13. For example, after the device cabinet 1 is mounted, one of the first side wall 12 and the second side wall 13 may be a front cabinet plate of the device cabinet 1, and the other may be a rear cabinet plate of the device cabinet 1. For another example, after the device cabinet 1 is mounted, one of the first side wall 12 and the second side wall 13 may be a left cabinet plate of the device cabinet 1, and the other may be a right cabinet plate of the device cabinet 1.

The first cabinet door 14 in a closed state is located between the first side wall 12 and the second side wall 13, and the first cabinet door 14 is connected to the first side wall 12 or the second side wall 13. Refer to FIG. 3 and FIG. 4. For example, the first cabinet door 14 is connected to the second side wall 13. The first cabinet door 14 is moveable (including rotatable, slidable, and the like) relative to the device cabinet 1. For example, the first cabinet door 14 is hinged (connected through a hinge) to the second side wall 13. The device cabinet 1 can be opened through or blocked by the first cabinet door 14. For example, when the first opening 11 is blocked by the first cabinet door 14, the device cabinet 1 is blocked by the first cabinet door 14. When the first opening 11 is opened through the first cabinet door 14, the device cabinet 1 is opened through the first cabinet door 14. FIG. 3 shows a case in which the first opening 11 is blocked by the first cabinet door 14 (the first cabinet door 14 is in the closed state and the device cabinet 1 is blocked by the first cabinet door 14). FIG. 4 shows a case in which the first opening 11 is opened through the first cabinet door 14 (the first cabinet door 14 is in an open state and the device cabinet 1 is opened through the first cabinet door 14). Refer to FIG. 3. The charging device 100 further includes a display 121. The display 121 is fastened to the first side wall 12, and a display area of the display 121 is exposed outside the device cabinet 1. For example, the display area of the display 121 is exposed outside the device cabinet 1 through an opening on the first side wall 12. The display area that is of the display 121 and that is exposed outside the device cabinet 1 is used by a user to observe content displayed on the display 121 (for example, charging information, a charging status, and the like may be displayed on the display 121). After the device cabinet 1 is mounted, the display 121 may face the user, so that the user can observe the content on the display 121.

The display 121 is not disposed on the first cabinet door 14 that is used as a maintenance door, but the display 121 is mounted on the first side wall 12 of the device cabinet 1. When a component in the device cabinet 1 needs to be maintained, a position of the display 121 does not change (the display 121 does not move with the first cabinet door 14) in a process of opening the first cabinet door 14. In this way, a conducting wire connected to the display 121 is not pulled out due to movement of the first cabinet door 14, and difficulty in maintaining in the device cabinet 1 by a person is reduced.

In some examples, the charging device 100 further includes a card reading apparatus 122. The card reading apparatus 122 is fastened to the first side wall 12, and the card reading apparatus 122 is exposed outside the device cabinet 1. In the example shown in FIG. 3, the card reading apparatus 122 includes a radio frequency identification card reader 1221 (RFID card reader) and a point of sale terminal 1222 (POS terminal). An identification area of the radio frequency identification card reader 1221 is exposed outside the device cabinet 1, and a card insertion area and a password enter area of the point of sale terminal 1222 are exposed outside the device cabinet 1. In some other examples, only the radio frequency identification card reader 1221 may be disposed on the first side wall 12, and the point of sale terminal 1222 is not disposed on the first side wall 12. Alternatively, only the point of sale terminal 1222 may be disposed on the first side wall 12, and the radio frequency identification card reader 1221 is not disposed on the first side wall 12. In some other examples, the card reading apparatus 122 may be a card reading device other than the foregoing two card reading devices. The card reading apparatus 122 is configured to identify an integrated circuit card (Integrated Circuit Card, IC card), so that the charging device 100 can identify an IC card (a bank card, a charging card, or the like) of the user through the card reading apparatus 122, and perform corresponding charging and fee deduction.

In the examples shown in FIG. 3 and FIG. 4, the card reading apparatus 122 and the display 121 are arranged in a vertical direction. In this arrangement manner, a size of the device cabinet 1 in a width direction can be reduced, and an area occupied by the device cabinet 1 can be reduced. In some other examples, the card reading apparatus 122 may alternatively be disposed at another appropriate position. A height direction of the device cabinet 1 is a gravity direction of the device cabinet 1 after mounting is completed. A thickness direction of the device cabinet 1 is a distribution direction of the first side wall 12 and the second side wall 13. The width direction of the device cabinet 1 is perpendicular to the thickness direction and the height direction of the device cabinet 1. It can be understood that the width direction of the device cabinet 1 and the thickness direction of the device cabinet 1 are two horizontal directions perpendicular to each other.

In some examples, the display 121 and the card reading apparatus 122 may be integrated into a module, to improve integration of the display 121 and the card reading apparatus 122, and facilitate overall mounting or overall disassembly of the module formed by integrating the display 121 and the card reading apparatus 122. For example, refer to FIG. 3. The charging device 100 further includes a mounting plate 123. The display 121 and the card reading apparatus 122 are both fastened to the mounting plate 123. Before the charging device 100 is assembled, the display 121 and the card reading apparatus 122 may be fastened to the mounting plate 123 in advance, and then the mounting plate 123 is fastened to the first side wall 12. In this way, the mounting plate 123 is fastened to the first side wall 12, together with the display 121 and the card reading apparatus 122. This improves assembly efficiency of the charging device 100.

In addition, refer to FIG. 4. The first direct current power distribution apparatus 4 of the charging device 100 includes the first switch component 41. The first switch component 41 is located in the device cabinet 1 and is fastened to the second side wall 13. The input end of the first switch component 41 is configured to electrically connect to the power supply 200. For example, the charging device 100 further includes a second cable 7. One part of the second cable 7 is located in the device cabinet 1 and is electrically connected to the input end of the first switch component 41. The other part of the second cable 7 is located outside the device cabinet 1 and is configured to electrically connect to the power supply 200. Refer back to FIG. 2. The part that is of the second cable 7 and that is outside the device cabinet 1 is electrically connected to the second direct current power distribution apparatus 6, the second direct current power distribution apparatus 6 is electrically connected to the power conversion apparatus 2, the power conversion apparatus 2 is electrically connected to the alternating current power distribution apparatus 3, and the alternating current power distribution apparatus 3 is electrically connected to the power supply 200. In this manner, the second cable 7 is electrically connected to the power supply 200 and the first switch component 41. A current of the power supply 200 is transmitted to the input end of the first switch component 41 through the second cable 7 after power conversion by the power conversion apparatus 2. If the charging device 100 shown in FIG. 1 is used, the input end of the first switch component 41 is electrically connected to the power conversion apparatus 2, the power conversion apparatus 2 is electrically connected to the alternating current power distribution apparatus 3, and the alternating current power distribution apparatus 3 is electrically connected to the power supply 200 through the second cable 7. In this manner, the second cable 7 is electrically connected to the power supply 200 and the first switch component 41. A current of the power supply 200 is transmitted to the alternating current power distribution apparatus 3 through the second cable 7, and then transmitted to the input end of the first switch component 41 after power conversion by the power conversion apparatus 2.

Refer to FIG. 3 and FIG. 4 again. The charging device 100 further includes a charging connector 8. The charging connector 8 is located outside the device cabinet 1 and is configured to connect to a to-be-charged device. When the charging connector 8 is not used, the charging connector 8 may be placed on the device cabinet 1. For example, the charging device 100 further includes a connector holder 124. In the examples shown in FIG. 3 and FIG. 4, the connector holder 124 is fastened to the first side wall 12, and the connector holder 124 is used for insertion of the charging connector 8. In other words, when the charging connector 8 is not used, the charging connector 8 may be inserted into the connector holder 124. In the examples shown in FIG. 3 and FIG. 4, the connector holder 124 is fastened to the first side wall 12. When the first cabinet door 14 is opened, the connector holder 124 and the charging connector 8 placed on the connector holder 124 do not move with movement of the first cabinet door 14.

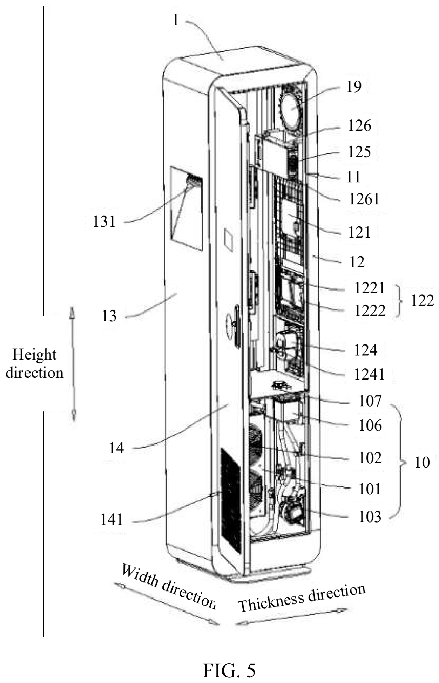

FIG. 5 shows an internal structure of the device cabinet 1 from another perspective (FIG. 5 and FIG. 4 show the device cabinet 1 from two different perspectives). Refer to FIG. 5. A return switch 1241 (for example, a micro switch) is disposed on the connector holder 124. After the charging connector 8 is inserted into the connector holder 124, the return switch 1241 is triggered. After the charging connector 8 is removed from the connector holder 124, the return switch 1241 is released. The charging device 100 may determine, by detecting whether the return switch 1241 is triggered, whether the charging connector 8 is inserted into the connector holder 124.

In addition, in an example in which the connector holder 124 is fastened to the first side wall 12, an arrangement manner of the connector holder 124 and the display 121 may be set based on a requirement. For example, refer to FIG. 5. The connector holder 124 and the display 121 are arranged in a vertical direction, and the connector holder 124 is located below the display 121. In this arrangement manner, a size of the device cabinet 1 in a width direction can be reduced, and an area occupied by the device cabinet 1 can be reduced.

Refer to FIG. 4. To connect the first switch component 41 to the charging connector 8, the charging device 100 further includes the first cable 9. The second side wall 13 has a cable outlet hole 131 through which the first cable 9 passes. One part of the first cable 9 is located in the device cabinet 1 and is electrically connected to the output end of the first switch component 41. The other part of the first cable 9 is located outside the device cabinet 1 and is connected to the charging connector 8. The input end of the first switch component 41 is electrically connected to the power supply 200. The current provided by the power supply 200 is transmitted to the first switch component 41 through the input end of the first switch component 41 after power conversion. When the first switch component 41 is turned on, the first switch component 41 allows the current to be output from the output end of the first switch component 41. The current output from the output end of the first switch component 41 is transmitted to the charging connector 8 through the first cable 9, and then is used for charging the to-be-charged device through the charging connector 8.

In this application, the first switch component 41 is disposed on the second side wall 13, and the first switch component 41 and the display 121 are respectively located on different sides of the first opening 11. After the first cabinet door 14 is opened, the display 121 can be maintained on a side facing the first side wall 12, and the first switch component 41 can be maintained on a side facing the second side wall 13. This improves efficiency in maintenance by a person. In addition, the cable outlet hole 131 of the first cable 9 and the first switch component 41 are both disposed on the second side wall 13, so that the first cable 9 is routed out nearby, and a length of the first cable 9 reserved in the device cabinet 1 is shortened. In addition, in the example shown in FIG. 4, the cable outlet hole 131 is located above the first switch component 41, so that the first cable 9 extends out of the device cabinet 1 from a high position. This can effectively share a weight of the first cable 9, thereby making a process of using the charging connector 8 by a user more labor-saving and an operation more convenient.

In some examples, refer to FIG. 4. The first direct current power distribution apparatus 4 of the charging device 100 further includes an input metal busbar 42 (for example, a copper busbar or an aluminum busbar) and an output metal busbar 43 (for example, a copper busbar or an aluminum busbar). The input metal busbar 42 is connected to the input end of the first switch component 41, and the output metal busbar 43 is connected to the output end of the first switch component 41. The part that is of the first cable 9 and that is inside the device cabinet 1 is electrically connected to the output metal busbar 43, and the part that is of the second cable 7 and that is inside the device cabinet 1 is electrically connected to the input metal busbar 42. In the example shown in FIG. 4, one end of the second cable 7 is fastened to the input metal busbar 42, to implement an electrical connection between the second cable 7 and the input metal busbar 42. In some other examples (for example, in a case of the integrated charging pile shown in FIG. 1), the second cable 7 is connected to the input end of the alternating current power distribution apparatus 3. The output end of the alternating current power distribution apparatus 3 is electrically connected to the input end of the power conversion apparatus 2 through a copper busbar or a conducting wire. The output end of the power conversion apparatus 2 is connected to the input metal busbar 42 through a copper busbar or a conducting wire, to implement an electrical connection between the second cable 7 and the input metal busbar 42.

In some examples, refer to FIG. 4. The first direct current power distribution apparatus 4 of the charging device 100 may further include a protection component 44. The protection component 44 may be a fuse, a surge protector, or the like. The protection component 44 is connected to the input metal busbar 42 or the output metal busbar 43. For example, when the protection component 44 is a fuse, the protection component 44 is fastened between an input end of the switch component 23 and the input metal busbar 42, or the protection component 44 is fastened between an output end of the switch component 23 and the output metal busbar 43. The protection component 44 is configured to disconnect a circuit between the switch component 23 and the input metal busbar 42 (or the output metal busbar 43). For another example, when the protection component 44 is a surge protector, for example, an input end of the protection component 44 is electrically connected to the input metal busbar 42 through a wire, or an input end of the protection component 44 is electrically connected to the output metal busbar 43 through a wire, and an output end of the protection component 44 is grounded. When a spike current or voltage is generated in a circuit, the protection component 44 shunts a current flowing through the input metal busbar 42 or a current flowing through the output metal busbar 43, to reduce a risk of damage caused by a surge to another device in a power loop. A plurality of apparatuses or components (for example, the first switch component 41, the protection component 44, the input metal busbar 42, and the output metal busbar 43) included in the first direct current power distribution apparatus 4 of the charging device 100 may be mounted on the second side wall 13 one by one, or may be integrated and then mounted on the second side wall 13 in a unified manner. For example, the first direct current power distribution apparatus 4 of the charging device 100 may further include a second mounting base 45. The second mounting base 45 is fastened to the second side wall 13. The first switch component 41, the protection component 44, the input metal busbar 42, and the output metal busbar 43 are all fastened to the second mounting base 45, so that integration of a power distribution apparatus (the first direct current power distribution apparatus 4) in the device cabinet 1 is higher, and mounting efficiency and subsequent maintenance efficiency of the charging device 100 are greatly improved.

For example, in a process of mounting the first direct current power distribution apparatus 4, the first direct current power distribution apparatus 4 may be independently mounted first, that is, the first switch component 41, the protection component 44, the input metal busbar 42, and the output metal busbar 43 are all fastened to the second mounting base 45, and then the mounting plate 123 is mounted on the second side wall 13. In this way, the first direct current power distribution apparatus 4 can be integrally mounted on the second side wall 13. For another example, in a process of maintaining the first direct current power distribution apparatus 4, the first direct current power distribution apparatus 4 may be completely disassembled and completely replaced by disassembling the second mounting base 45.

Refer to FIG. 4. The second mounting base 45 may be a metal plate. In some other examples, the second mounting base 45 may alternatively be a support frame or another structure that can be used as a base or a base plate. This is not specifically limited in this application.

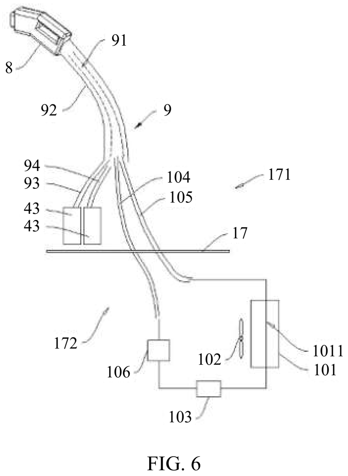

In some examples, the first cable 9 may be cooled. For example, refer to FIG. 5. The charging device 100 may further include a cooling apparatus 10. The cooling apparatus 10 is located in the device cabinet 1, and the cooling apparatus 10 includes a heat exchanger 101, a heat exchange fan 102, and a drive pump 103. In addition, the first cable 9 has a heat dissipation channel 91. FIG. 6 shows an example of a structure of the heat dissipation channel 91. Refer to FIG. 6. A heat exchange channel 1011 of the heat exchanger 101 communicates with the heat dissipation channel 91. For example, the cooling apparatus 10 further includes a liquid inlet pipe 104 and a liquid outlet pipe 105. One end of the liquid inlet pipe 104 is connected to an inlet of the heat exchange channel 1011, and the other end of the liquid inlet pipe 104 is connected to an outlet of the heat dissipation channel 91. One end of the liquid outlet pipe 105 is connected to an outlet of the heat exchange channel 1011, and the other end of the liquid outlet pipe 105 is connected to an inlet of the heat dissipation channel 91. Under drive of the drive pump 103, a cooling medium (for example, a water-based solution or an oil-based solution) flows out from the outlet of the heat exchange channel 1011 and flows into the liquid outlet pipe 105. The cooling medium in the liquid outlet pipe 105 flows into the heat dissipation channel 91 to cool the first cable 9, then flows from the heat dissipation channel 91 into the liquid inlet pipe 104, and flows back into the heat exchange channel 1011 through the liquid inlet pipe 104, to implement circulating flow of the cooling medium between the heat exchange channel 1011 and the heat dissipation channel 91.

The cooling medium in the heat dissipation channel 91 can cool the first cable 9. After absorbing heat from the first cable 9 in the heat dissipation channel 91, the cooling medium flows into the heat exchange channel 1011 of the heat exchanger 101. The heat exchange fan 102 blows air toward the heat exchanger 101. Under an action of the heat exchange fan 102, the cooling medium exchanges heat with air through the heat exchanger 101. A temperature of the cooling medium decreases after heat exchange in the heat exchanger 101, and then the cooling medium flows back into the heat dissipation channel 91 to cool the first cable 9.

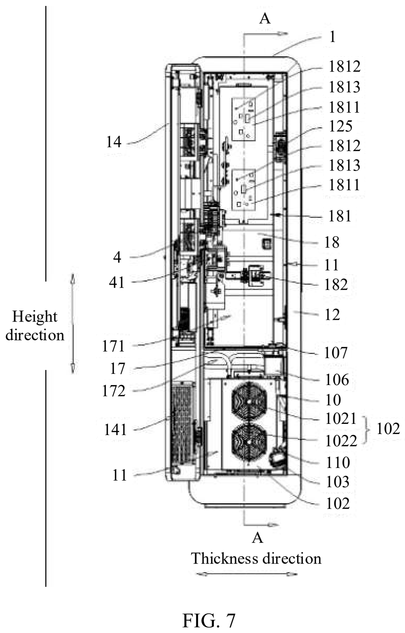

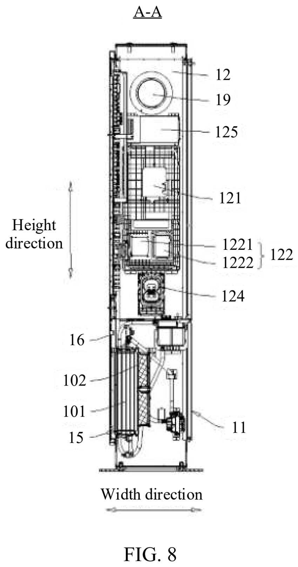

FIG. 7 shows an internal structure of the device cabinet 1 from another perspective (FIG. 7, FIG. 5, and FIG. 4 show the device cabinet 1 from three different perspectives). FIG. 8 is a sectional view of the charging device 100 in FIG. 7 obtained through cutting along A-A. Refer to FIG. 8. The heat exchange fan 102 is located on a side that is of the heat exchanger 101 and that faces the first cabinet door 14 (the first cabinet door 14 in the closed state is used as a reference). That is, the heat exchange fan 102 is located on a side that is of the heat exchanger 101 and that faces the first opening 11, so that the heat exchanger 101 is far away from the first opening 11. In a process of opening the first cabinet door 14 to maintain a component in the device cabinet 1, because the heat exchanger 101 is far away from the first opening 11, a possibility of damage to the heat exchanger 101 is reduced under protection of the heat exchange fan 102. In addition, an air duct (not shown in the accompanying drawings) may be further disposed between the heat exchanger 101 and the heat exchange fan 102. The air duct gathers and guides air between the heat exchanger 101 and the heat exchange fan 102.

Refer back to FIG. 7. To enable external air to enter the device cabinet 1 to exchange heat with the heat exchanger 101, the first cabinet door 14 has a first air vent 141, and the first air vent 141 faces the heat exchange fan 102 (when the first cabinet door 14 is in the closed state). Under an action of the heat exchange fan 102, air outside the device cabinet 1 enters the device cabinet 1 through the first air vent 141 to exchange heat with the heat exchanger 101, to cool the cooling medium in the heat exchanger 101.

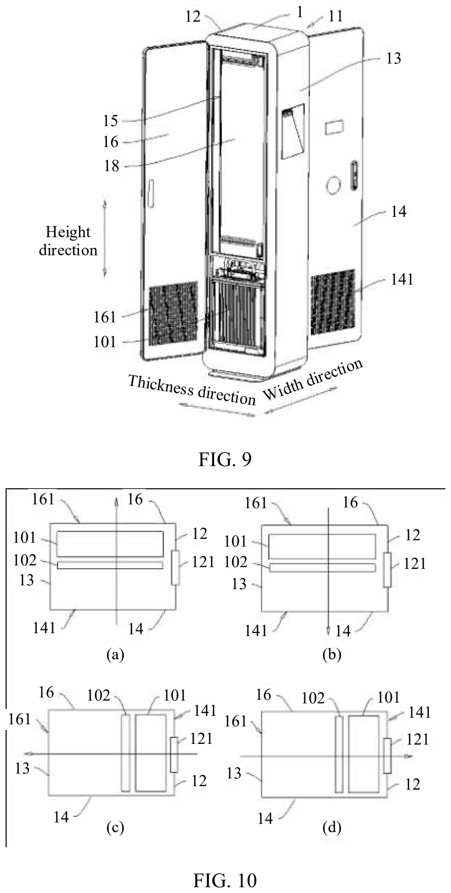

In some examples, the device cabinet 1 further has another maintenance opening. For example, the device cabinet 1 has a second opening 15 that communicates with internal space of the device cabinet 1. FIG. 9 shows an example structure of the second opening 15. Refer to FIG. 9. The second opening 15 is located between the first side wall 12 and the second side wall 13, and a distribution direction of the second opening 15 and the first opening 11 is perpendicular to the distribution direction of the first side wall 12 and the second side wall 13. That is, the first side wall 12 and the second side wall 13 are distributed in the thickness direction of the device cabinet 1, and the first opening 11 and the second opening 15 are distributed in a width direction of the cabinet body. In addition, the charging device 100 further includes a second cabinet door 16. The second cabinet door 16 is located between the first side wall 12 and the second side wall 13, and the first cabinet door 14 and the second cabinet door 16 are disposed opposite to each other. In the example shown in FIG. 9, the second cabinet door 16 is connected to the first side wall 12. In some other examples, the second cabinet door 16 is connected to the second side wall 13. The second cabinet door 16 is movable relative to the device cabinet 1 (for example, the second cabinet door 16 is connected to the device cabinet 1 through a hinge), and the second cabinet door 16 is configured to open or block the device cabinet 1. For example, when the second opening 15 is blocked by the second cabinet door 16, the device cabinet 1 is also blocked by the second cabinet door 16. When the second opening 15 is opened through the second cabinet door 16, the device cabinet 1 is also opened through the second cabinet door 16.

Refer to FIG. 8 and FIG. 9. The heat exchanger 101 is located on a side that is of the heat exchange fan 102 and that faces the second cabinet door 16 (the second cabinet door 16 in a closed state is used as a reference). That is, the heat exchanger 101 is relatively close to the second cabinet door 16. When the heat exchanger 101 needs to be maintained, the second cabinet door 16 may be opened, so that the heat exchanger 101 is exposed outside through the second opening 15, to facilitate maintenance of the heat exchanger 101 by a person. When the device cabinet 1 has both the first opening 11 and the second opening 15, the first opening 11 and the second opening 15 may be classified based on functions. For example, the first opening 11 may be a common maintenance opening (used to maintain the display 121, the first direct current power distribution apparatus 4, and the like), and the second opening 15 may be an uncommon maintenance opening (used to maintain the heat exchanger 101).

Refer to FIG. 9. To facilitate heat exchange between the heat exchanger 101 and air, the second cabinet door 16 has a second air vent 161, and the second air vent 161 faces the heat exchanger 101 (when the second cabinet door 16 is in the closed state). The heat exchange fan 102 enables airflow to flow between the first air vent 141 and the second air vent 161. The first air vent 141 on the first cabinet door 14 and the second air vent 161 on the second cabinet door 16 cooperate with each other, so that air outside the device cabinet 1 enters the device cabinet 1 through one of the first air vent 141 and the second air vent 161 to exchange heat with the heat exchanger 101, and air after heat exchange is discharged outside the device cabinet 1 through the other of the first air vent 141 and the second air vent 161. This facilitates heat exchange between the heat exchanger 101 and air.

FIG. 10 shows four examples of directions of airflow that exchanges heat with the heat exchanger 101. In the charging device 100 shown in FIG. 9, if the first air vent 141 is an air intake vent and the second air vent 161 is an air exhaust vent, a direction of airflow that exchanges heat with the heat exchanger 101 is shown in (a) in FIG. 10. In the charging device 100 shown in FIG. 9, if the first air vent 141 is an air exhaust vent and the second air vent 161 is an air intake vent, a direction of airflow that exchanges heat with the heat exchanger 101 is shown in (b) in FIG. 10. In some other examples, the first air vent 141 is provided on the first side wall 12, and the second air vent 161 is provided on the second side wall 13. The heat exchange fan 102 enables airflow to flow between the first air vent 141 and the second air vent 161. If the first air vent 141 is an air intake vent and the second air vent 161 is an air exhaust vent, a direction of airflow that exchanges heat with the heat exchanger 101 is shown in (c) in FIG. 10. If the first air vent 141 is an air exhaust vent and the second air vent 161 is an air intake vent, a direction of airflow that exchanges heat with the heat exchanger 101 is shown in (d) in FIG. 10.

Refer back to FIG. 7. In an example in which the cooling apparatus 10 is disposed in the device cabinet 1, the first direct current power distribution apparatus 4 (including at least the first switch component 41) may be disposed above the cooling apparatus 10. In a case of natural disasters such as flood and heavy rain, if water accumulates in the device cabinet 1, because the first direct current power distribution apparatus 4 is mounted at a relatively high position, a risk of a short circuit of the first direct current power distribution apparatus 4 can be delayed. In addition, a possibility that liquid splashes to the first direct current power distribution apparatus 4 when liquid in the cooling apparatus 10 leaks (for example, the cooling medium leaks) is reduced, and a service life of the first direct current power distribution apparatus 4 is prolonged. In some other examples, the first direct current power distribution apparatus 4 may alternatively be disposed below the cooling apparatus 10.

In addition, when the first direct current power distribution apparatus 4 and the cooling apparatus 10 are both mounted in the device cabinet 1, the internal space of the device cabinet 1 may be partitioned. For example, refer to FIG. 7. The charging device 100 may further include a partition plate 17. The partition plate 17 is fastened in the device cabinet 1, and the internal space of the device cabinet 1 is partitioned through the partition plate 17. The partition plate 17 partitions the internal space of the device cabinet 1 into a first chamber 171 and a second chamber 172. The first direct current power distribution apparatus 4 (including at least the first switch component 41) is located in the first chamber 171. The first chamber 171 may also be referred to as an electrical chamber. The cooling apparatus 10 (including at least the heat exchanger 101 and the heat exchange fan 102) is located in the second chamber 172. The second chamber 172 may also be referred to as a cold source chamber. The cooling apparatus 10 and the power distribution apparatus (the first direct current power distribution apparatus 4) in the device cabinet 1 are separated from each other, to implement water-electricity isolation and reduce a safety risk.

In the example shown in FIG. 7, because the first direct current power distribution apparatus 4 is disposed above the cooling apparatus 10, the first chamber 171 is located above the second chamber 172. In some other examples, if the first direct current power distribution apparatus 4 is disposed below the cooling apparatus 10, the first chamber 171 is located below the second chamber 172.

In addition, refer to FIG. 6. When the liquid inlet pipe 104 and the liquid outlet pipe 105 are provided inside the device cabinet 1, both the liquid inlet pipe 104 and the liquid outlet pipe 105 pass through the partition plate 17. Both a part that is of the liquid inlet pipe 104 and that is located in the first chamber 171 and a part that is of the liquid outlet pipe 105 and that is located in the first chamber 171 are connected to the heat dissipation channel 91, and both a part that is of the liquid inlet pipe 104 and that is located in the second chamber 172 and a part that is of the liquid outlet pipe 105 and that is located in the second chamber 172 are connected to the heat exchange channel 1011 of the heat exchanger 101.

In some examples, refer to FIG. 5 and FIG. 6. The cooling apparatus 10 further includes an expansion water tank 106 and a liquid level temperature sensor 107. The expansion water tank 106 is connected to the heat dissipation channel 91 and the heat exchange channel 1011. The expansion water tank 106 is configured to adjust pressure of a pipeline (for example, the liquid inlet pipe 104 and the liquid outlet pipe 105) between the heat exchange channel 1011 and the heat dissipation channel 91. The liquid level temperature sensor 107 extends into the expansion water tank 106, and is configured to detect a temperature and a liquid level of liquid in the expansion water tank 106. When the internal space of the device cabinet 1 is divided into the first chamber 171 and the second chamber 172, the expansion water tank 106 is located in the second chamber 172.

In some examples, refer to FIG. 7. To detect internal water intrusion of the charging device 100, the charging device 100 further includes a water immersion sensor 110. The water immersion sensor 110 may be disposed at any suitable position in the device cabinet 1. For example, the heat exchange fan 102 includes a first heat exchange fan 1021 and a second heat exchange fan 1022. The first heat exchange fan 1021 and the second heat exchange fan 1022 each include a motor (not shown in the accompanying drawings) and fan blades (not shown in the accompanying drawings). The motor of the first heat exchange fan 1021 can drive the fan blades of the first heat exchange fan 1021 to rotate, and the motor of the second heat exchange fan 1022 can drive the fan blades of the second heat exchange fan 1022 to rotate. The first heat exchange fan 1021 is located above the second heat exchange fan 1022. Because the motor is easily damaged when water enters the motor, a height of the water immersion sensor 110 is not greater than a height of the motor of the second heat exchange fan 1022. When the internal space of the device cabinet 1 is divided into the first chamber 171 and the second chamber 172, the water immersion sensor 110 is located in the second chamber 172. Refer back to FIG. 4. When the cooling apparatus 10 is disposed in the device cabinet 1, at least a part that is of the second cable 7 and that is in the device cabinet 1 is located on a side that is of the heat exchange fan 102 and that faces the first cabinet door 14 (the first cabinet door 14 in the closed state is used as a reference). That is, a segment of the part of the second cable 7 in the device cabinet 1 is located on the side that is of the heat exchange fan 102 and that faces the first cabinet door 14. For example, a part of the second cable 7 extending into the second chamber 172 is located on the side that is of the heat exchange fan 102 and that faces the first cabinet door 14. That is, at least a segment of the part of the second cable 7 in the device cabinet 1 is closer to the first opening 11. After a person opens the first cabinet door 14, the person can mount, disassemble, or maintain the second cable 7 from the first opening 11. In addition, refer to FIG. 4. In some examples, the charging device 100 may further include a control apparatus 181.

The control apparatus 181 includes a circuit board 1811 and a plurality of electronic components 1812. The plurality of electronic components 1812 are fastened to the circuit board 1811, and the circuit board 1811 is fastened in the device cabinet 1. For example, an edge that is of the circuit board 1811 and that is close to the first side wall 12 is fastened to the first side wall 12 through a flange and a screw, and an edge that is of the circuit board 1811 and that is close to the second side wall 13 is fastened to the second side wall 13 through a flange and a screw. For another example, the circuit board 1811 is fastened to one plate structure. An edge that is of the plate structure and that is close to the first side wall 12 is fastened to the first side wall 12 through a flange and a screw, and an edge that is of the plate structure and that is close to the second side wall 13 is fastened to the second side wall 13 through a flange and a screw. The circuit board 1811 is located on a side that is of the first switch component 41 and that is away from the first cabinet door 14, that is, the circuit board 1811 is disposed away from the first cabinet door 14 and the first opening 11. In this way, interference caused by the circuit board 1811 to maintenance of the first switch component 41 is reduced when the first switch component 41 needs to be maintained. In addition, because the circuit board 1811 is far away from the first opening 11, in a process of opening the first opening 11 to maintain another apparatus (an apparatus other than the control apparatus 181) in the device cabinet 1, a possibility of damage to the circuit board 1811 can be reduced, and the circuit board 1811 is protected.

Refer to FIG. 4. One board surface of the circuit board 1811 faces the first cabinet door 14 (the first cabinet door 14 in the closed state is used as a reference), and the plurality of electronic components 1812 are fastened to the board surface that is of the circuit board 1811 and that faces the first cabinet door 14. After the first cabinet door 14 is opened, one board surface of the circuit board 1811 faces the first opening 11, and the plurality of electronic components 1812 are fastened to the board surface that is of the circuit board 1811 and that faces the first opening 11. When the control apparatus 181 needs to be maintained, after the first cabinet door 14 is opened, the plurality of electronic components 1812 on the circuit board 1811 face the person, so that the person maintains the circuit board 1811 and the electronic components 1812 on the circuit board 1811. The plurality of electronic components 1812 include a control chip 1813. The control chip 1813 is electrically connected to the display 121, and the control chip 1813 is configured to control the display 121. In addition, in some examples, the control chip 1813 may be further electrically connected to the first switch component 41, and the control chip 1813 is configured to control on/off of the first switch component 41. Alternatively, the control chip 1813 may be further electrically connected to the drive pump 103, and the control chip 1813 is used for control.

In some examples, the control apparatus 181 may include a plurality of circuit boards 1811. For example, the plurality of circuit boards 1811 include a main control board and a charging control board. A plurality of electronic components 1812 are disposed on each of the main control board and the charging control board. The plurality of electronic components 1812 on the main control board include a control chip 1813, and the plurality of electronic components 1812 on the charging control board also include a control chip 1813. The main control board is configured to control input of the power supply 200, display content of the display 121, and the like. The charging control board is configured to control the charging connector 8 to charge a to-be-charged device.

Refer to FIG. 4. In some examples, the charging device 100 may further include a power supply apparatus 125 (auxiliary power supply). The power supply apparatus 125 is electrically connected to the power supply 200 and the circuit board 1811. The power supply apparatus 125 is configured to convert an alternating current input by the power supply 200 into a direct current to supply power to the circuit board 1811. In other words, the power supply apparatus 125 is a small power conversion apparatus.

The power supply apparatus 125 may be fastened at any appropriate position. For example, refer to FIG. 5. The power supply apparatus 125 is located in the device cabinet 1 and is connected to the first side wall 12. The power supply apparatus 125 is slidable relative to the first side wall 12 in a direction close to or away from the first cabinet door 14. In other words, after the first cabinet door 14 is opened, the power supply apparatus 125 can be pulled in the width direction of the device cabinet 1. Any connection structure that can implement sliding of the power supply apparatus 125 relative to the first side wall 12 can be used to connect the power supply apparatus 125 and the first side wall 12. In the example shown in FIG. 5, a mounting housing 126 is fastened to the first side wall 12, and the mounting housing 126 has a mounting opening 1261 facing the first opening 11. The power supply apparatus 125 may be inserted into the mounting housing 126 in the width direction of the device cabinet 1 from the mounting opening 1261, and the power supply apparatus 125 may also be removed from the mounting housing 126 in the width direction of the device cabinet 1 from the mounting opening 1261.

In some other examples, the first side wall 12 is provided with a sliding groove, and the power supply apparatus 125 is provided with a sliding block. The sliding block on the power supply apparatus 125 is slidable in the sliding groove on the first side wall 12. A sliding connection between the power supply apparatus 125 and the first side wall 12 is implemented through cooperation between the sliding block and the sliding groove. The power supply apparatus 125 is set to be slidable relative to the device cabinet 1, to facilitate mounting and disassembly of the power supply apparatus 125.

After the first cabinet door 14 is opened, in a process of pulling the power supply apparatus 125, the power supply apparatus 125 slides in a direction close to or away from the first opening 11, and the first opening 11 communicates with external space. When the power supply apparatus 125 needs to be removed, the person pulls the power supply apparatus 125 outward at the first opening 11, so that the power supply apparatus 125 moves close to the first opening 11, and the person gradually pulls the power supply apparatus 125 out of the device cabinet 1, to disassemble the power supply apparatus 125. When the power supply apparatus 125 needs to be mounted, the power supply apparatus 125 is pushed toward the inside of the device cabinet 1. After the power supply apparatus 125 is located in the device cabinet 1, the power supply apparatus 125 is pushed continuously in the direction away from the first opening 11, to complete mounting of the power supply apparatus 125.

Refer to FIG. 4 and FIG. 5. Because the first switch component 41 on the second side wall 13 needs to connect to a cable, in this application, the power supply apparatus 125 is disposed on the first side wall 12, so that the power supply apparatus 125 is slidable relative to the first side wall 12. In this way, the power supply apparatus 125 can be disassembled and assembled through the first opening 11, and impact of the power supply apparatus 125 on wiring of the first switch component 41 is reduced, so that an internal layout of the device cabinet 1 is more appropriate.

In some other examples, the power supply apparatus 125 may alternatively be disposed on the first cabinet door 14 or the second cabinet door 16.

In addition, refer to FIG. 7. The charging device 100 further includes a second switch component 182 (for example, an air switch, a circuit breaker, or a contactor). An input end of the second switch component 182 is electrically connected to the power supply 200 through a conducting wire, and an output end of the second switch component 182 is electrically connected to the power supply apparatus 125 through a conducting wire. The second switch component 182 is a power distribution component of the power supply apparatus 125, and the second switch component 182 can control connection and disconnection of a circuit between the power supply apparatus 125 and the power supply 200. When the charging device 100 further includes the second switch component 182, the second switch component 182 may also be fastened to the first side wall 12. However, in some examples, because a plurality of apparatuses are mounted on the first side wall 12, the second switch component 182 may be fastened between the first side wall 12 and the second side wall 13 through a bracket. In some examples, the control apparatus 181 and the second switch component 182 may alternatively be integrated. For example, refer to FIG. 7. The charging device 100 may further include a first mounting base 18 (for example, a metal plate or a bracket), the circuit board 1811 (one or more) of the control apparatus 181 and the second switch component 182 are both fastened to the first mounting base 18. The first mounting base 18 is fastened in the device cabinet 1 (for example, the first mounting base 18 is fastened to the first side wall 12 and the second side wall 13 through a flange or a bracket), and the first mounting base 18 is located on a side that is of the first direct current power distribution apparatus 4 and that is away from the first opening 11, to implement integration of the control apparatus 181 and the second switch component 182, and facilitate integral mounting of the integrated control apparatus 181 and second switch component 182. For example, the control apparatus 181 and the second switch component 182 are first fastened to the first mounting base 18, and then the first mounting base 18 is integrally fastened in the device cabinet 1, together with the control apparatus 181 and the second switch component 182. This improves production efficiency of the charging device 100.

Refer to FIG. 4. In some examples, the charging device 100 further includes an electricity meter 142. The electricity meter 142 is located in the device cabinet 1 and is fastened to the first cabinet door 14. The electricity meter 142 is configured to detect a value of a current flowing through the input end or the output end of the first switch component 41, to meter a charge amount of the charging device 100. The electricity meter 142 may detect the current value at the input end or the output end of the first switch component 41 in any appropriate manner. For example, refer to FIG. 4. The first direct current power distribution apparatus 4 of the charging device 100 further includes a shunt 46. The shunt 46 may be a metal busbar (for example, a copper busbar or an aluminum busbar). The shunt 46 is fastened to the input metal busbar 42 or the output metal busbar 43 (FIG. 4 shows a case in which the shunt 46 is fastened to the input metal busbar 42). The shunt 46 is electrically connected to the electricity meter 142. The electricity meter 142 detects a current flowing through the shunt 46, to determine a current flowing through the input metal busbar 42.

In some examples, a display area of the electricity meter 142 (for example, a screen of the electricity meter 142) is exposed outside the device cabinet 1. For example, the first cabinet door 14 is provided with a window 1421 through which the screen of the electricity meter 142 can be exposed, so that the screen of the electricity meter 142 is exposed outside the device cabinet 1 through the window 1421 of the first cabinet door 14, to help the person observe a value of the electricity meter 142. In addition, because the first cabinet door 14 on which the window 1421 is located is adjacent to the first side wall 12 on which the display 121 is located, it is also convenient for the person to compare data displayed on the display 121 with data displayed on the electricity meter 142. In some other examples, the first cabinet door 14 may not be provided with the window 1421 through which the screen of the electricity meter 142 can be exposed, that is, a value of the electricity meter 142 cannot be observed without opening the first cabinet door 14. In some other examples, the charging device 100 may not be provided with the electricity meter 142.

In some examples, the charging device 100 further includes a functional member 147 configured to implement a specific function. For example, refer to FIG. 4. The charging device 100 further includes a mixed-flow fan 143 (which is a functional member 147). The mixed-flow fan 143 may be disposed at any appropriate position. For example, the mixed-flow fan 143 is fastened to the first cabinet door 14, and the mixed-flow fan 143 is configured to blow air into the device cabinet 1. For example, the mixed-flow fan 143 may blow air into a part that generates a relatively large amount of heat in the device cabinet 1, to eliminate a local hot spot in the device cabinet 1 and make a temperature inside the device cabinet 1 more uniform.

The part that generates a relatively large amount of heat in the device cabinet 1 may be a part that is of the first cable 9 and that cannot dissipate heat through the heat dissipation channel 91. For example, refer to FIG. 6. The first cable 9 includes a protective sleeve 92, a positive wire 93, and a negative wire 94. The heat dissipation channel 91 is located in the protective sleeve 92. A part of the positive wire 93 and a part of the negative wire 94 are located in the protective sleeve 92 and exchange heat with the heat dissipation channel 91. A part of the positive wire 93 and a part of the negative wire 94 are located outside the protective sleeve 92. The part that is of the positive wire 93 and that is located outside the protective sleeve 92 is connected to the output metal busbar 43 (positive electrode), and the part that is of the negative wire 94 and that is located outside the protective sleeve 92 is connected to the output metal busbar 43 (negative electrode). Because the part that is of the positive wire 93 and that is located outside the protective sleeve 92 and the part that is of the negative wire 94 and that is located outside the protective sleeve 92 cannot exchange heat with the heat dissipation channel 91, the part that is of the positive wire 93 and that is located outside the protective sleeve 92 and the part that is of the negative wire 94 and that is located outside the protective sleeve 92 have a relatively large amount of heat.

Refer back to FIG. 4. The mixed-flow fan 143 may include a first mixed-flow fan 1431. The first mixed-flow fan 1431 is located in the device cabinet 1 and is fastened to the first cabinet door 14. An air exhaust vent end of the first mixed-flow fan 1431 faces the part that is of the positive wire 93 and that is located outside the protective sleeve 92 and the part that is of the negative wire 94 and that is located outside the protective sleeve 92. The first mixed-flow fan 1431 blows air to the part that is of the positive wire 93 and that is located outside the protective sleeve 92 and the part that is of the negative wire 94 and that is located outside the protective sleeve 92, blows, to the device cabinet 1, heat on the part that is of the positive wire 93 and that is located outside the protective sleeve 92 and the part that is of the negative wire 94 and that is located outside the protective sleeve 92, and then exchanges heat with external air through the device cabinet 1 to implement heat dissipation.

In addition, in some examples, because the output metal busbar 43 generates a relatively large amount of heat due to long-time current flow, the air exhaust vent end of the first mixed-flow fan 1431 may blow air to the output metal busbar 43 (that is, blow air to the part that is of the positive wire 93 and that is located outside the protective sleeve 92 and the part that is of the negative wire 94 and that is located outside the protective sleeve 92 and blow air to the output metal busbar 43, or blow air to only the output metal busbar 43 without blowing air to the part that is of the positive wire 93 and that is located outside the protective sleeve 92 and the part that is of the negative wire 94 and that is located outside the protective sleeve 92), blows heat on the output metal busbar 43 to the device cabinet 1, and then exchanges heat with external air through the device cabinet 1 to implement heat dissipation.

Refer to FIG. 4. In some examples, the mixed-flow fan 143 may further include a second mixed-flow fan 1432. The second mixed-flow fan 1432 is located in the device cabinet 1 and is fastened to the first cabinet door 14. An air exhaust vent end of the second mixed-flow fan 1432 faces the first switch component 41, or an air exhaust vent end of the second mixed-flow fan 1432 faces the input metal busbar 42. Because the input metal busbar 42 and the first switch component 41 generate a large amount of heat due to long-time current flow, the second mixed-flow fan 1432 blows air to the input metal busbar 42 or the first switch component 41, blows heat on the input metal busbar 42 and the first switch component 41 to the device cabinet 1, and then exchanges heat with external air through the device cabinet 1 to implement heat dissipation.

In the example shown in FIG. 4, the electricity meter 142 is located between the first mixed-flow fan 1431 and the second mixed-flow fan 1432. In some other examples, only one mixed-flow fan 143 may be disposed in the device cabinet 1 (for example, only the first mixed-flow fan 1431 is disposed, or only the second mixed-flow fan 1432 is disposed). In some other examples, the mixed-flow fan 143 may not be disposed in the device cabinet 1.

Refer to FIG. 4. In some examples, the charging device 100 may further include an emergency stop button 144 (which is functional member 147). When an emergency danger occurs in a process of using the charging device 100, the emergency stop button 144 may be configured to control the first switch component 41 to disconnect a circuit between the power supply 200 and the charging connector 8. The emergency stop button 144 may be disposed at any appropriate position. In the example shown in FIG. 4, the emergency stop button 144 is fastened to the first cabinet door 14, and the emergency stop button 144 is located on a side that is of the second mixed-flow fan 1432 and that is away from the first mixed-flow fan 1431. In some other examples, the emergency stop button 144 is fastened to the first cabinet door 14, and the emergency stop button 144 is located between the first mixed-flow fan 1431 and the second mixed-flow fan 1432. In some other examples, when the second cabinet door 16 is mounted on the device cabinet 1, the emergency stop button 144 may be fastened to the second cabinet door 16. In some other examples, the charging device 100 may not include the emergency stop button 144.

Refer to FIG. 4. The charging device 100 may further include a heating apparatus 145 (which is functional member 147). When an ambient temperature is low, the heating apparatus 145 is configured to heat the internal space of the device cabinet 1, so that some apparatuses or components (for example, the display 121) that are not resistant to a low temperature can work normally. The heating apparatus 145 may be any apparatus that can generate heat. For example, the heating apparatus 145 includes a resistance wire and a fan, and the fan blows heat generated by the resistance wire into the device cabinet 1. The heating apparatus 145 may be disposed at any appropriate position in the device cabinet 1. In the example shown in FIG. 4, the heating apparatus 145 is fastened to the first cabinet door 14, and the heating apparatus 145 is located on a side that is of the second mixed-flow fan 1432 and that is away from the first mixed-flow fan 1431. In some other examples, the heating apparatus 145 is fastened to the first cabinet door 14, and the heating apparatus 145 is located between the first mixed-flow fan 1431 and the second mixed-flow fan 1432. In some other examples, the charging device 100 may not include the heating apparatus 145.

When the person needs to maintain an apparatus inside the device cabinet 1, after the first cabinet door 14 is opened, an apparatus on the first cabinet door 14 inevitably collides with the person or a maintenance tool. The heating apparatus 145, the mixed-flow fan 143, or the emergency stop button 144 is a functional member 147 that is not easily damaged. The functional member 147 (including at least one of the heating apparatus 145, the mixed-flow fan 143, or the emergency stop button 144) is disposed on the first cabinet door 14, so that there is more space on the first side wall 12 and the second side wall 13 for mounting an apparatus that is easily damaged (for example, the circuit board 1811 or the electronic component 1812). After the first cabinet door 14 is opened, some apparatuses that are not easily damaged (for example, the functional member 147) are exposed with the first cabinet door 14, and some apparatuses that are easily damaged are still located in the device cabinet 1. In this way, a layout of the apparatus inside the device cabinet 1 is more appropriate, and an overall service life of the charging device 100 is prolonged.

In addition, when water accumulates on the top of the first cabinet door 14, the first cabinet door 14 may be further provided with a water blocking structure. For example, refer to FIG. 4. The charging device 100 may further include a baffle plate 146. The baffle plate 146 is fastened to the first cabinet door 14, and the baffle plate 146 extends toward the internal space of the device cabinet 1 (when the first cabinet door 14 is in the closed state). When the functional member 147 (including at least one of the heating apparatus 145, the mixed-flow fan 143, or the emergency stop button 144) is disposed on the first cabinet door 14, the baffle plate 146 is located above the functional member 147. For example, in the example shown in FIG. 4, the heating apparatus 145, the electricity meter 142, the mixed-flow fan 143, and the emergency stop button 144 are disposed on the first cabinet door 14, and the heating apparatus 145, the electricity meter 142, the mixed-flow fan 143, and the emergency stop button 144 are all located below the baffle plate 146. After the first cabinet door 14 is opened, the baffle plate 146 can block and intercept liquid dripping from the top of the first cabinet door 14 to some extent. This reduces a possibility of a short circuit between a plurality of apparatuses on the first cabinet door 14 caused by liquid dripping from the top of the first cabinet door 14. In some other examples, the first cabinet door 14 may not be provided with the baffle plate 146.

Refer to FIG. 3. In some examples, the charging device 100 may further include a display light 19. The display light 19 is located above the display 121. The display light 19 is configured to display a charging status of the charging device 100. For example, the display light 19 changes a color or a shape to express information such as charging, standby, a fault, reservation, and a charge amount.

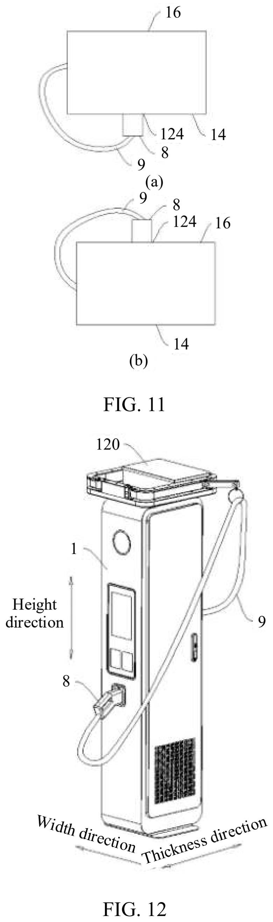

In addition, FIG. 11 shows two other positions of the connector holder 124. In the example shown in (a) in FIG. 11, the connector holder 124 is fastened to the first cabinet door 14. In the example shown in (b) in FIG. 11, the connector holder 124 is fastened to the second cabinet door 16.

In some examples, the charging device 100 may further include a connector cable management apparatus 120. FIG. 12 shows an example of a structure of the connector cable management apparatus 120. The connector cable management apparatus 120 is fastened to the top of the device cabinet 1, and the connector cable management apparatus 120 can lift the first cable 9 and share a part of a weight of the first cable 9, so that a process of using the charging connector 8 by the user is more labor-saving.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging device, comprising:
a device cabinet, wherein the device cabinet comprises a first side wall and a second side wall that are disposed opposite to each other;
a first cabinet door, wherein the first cabinet door is connected to the first side wall or the second side wall;
a display, wherein the display is fastened to the first side wall, and a display area of the display is exposed outside the device cabinet;
a first switch component, wherein the first switch component is located in the device cabinet and is fastened to the second side wall, and an input end of the first switch component is configured to electrically connect to a power supply;
a charging connector, wherein the charging connector is located outside the device cabinet and is configured to connect to a to-be-charged device; and
a first cable, wherein the second side wall has a cable outlet hole through which the first cable passes, one part of the first cable is located in the device cabinet and is electrically connected to an output end of the first switch component, and the other part of the first cable is located outside the device cabinet and is electrically connected to the charging connector.

2. The charging device according to claim 1, wherein the charging device further comprises a cooling apparatus, the cooling apparatus is located in the device cabinet, the cooling apparatus comprises a heat exchanger and a heat exchange fan, the first cable has a heat dissipation channel, a heat exchange channel of the heat exchanger communicates with the heat dissipation channel, the heat exchange fan is located on a side that is of the heat exchanger and that faces the first cabinet door, the first cabinet door is provided with a first air vent, and the first air vent faces the heat exchange fan.

3. The charging device according to claim 2, wherein the charging device further comprises a second cable, one part of the second cable is located outside the device cabinet and is configured to electrically connect to the power supply, and the other part of the second cable is located in the device cabinet and is electrically connected to the input end of the first switch component; and
at least a part that is of the second cable and that is in the device cabinet is located on a side that is of the heat exchange fan and that faces the first cabinet door.

4. The charging device according to claim 2, wherein the charging device further comprises a second cabinet door, the second cabinet door is disposed opposite to the first cabinet door, the second cabinet door is connected to the first side wall or the second side wall, the heat exchanger is located on a side that is of the heat exchange fan and that faces the second cabinet door, the second cabinet door is provided with a second air vent, and the second air vent faces the heat exchanger.

5. The charging device according to any one of claims 2 to 4, wherein the charging device further comprises a partition plate, the partition plate is fastened in the device cabinet, the partition plate divides internal space of the device cabinet into a first chamber and a second chamber, the first switch component is located in the first chamber, and the heat exchanger and the heat exchange fan are located in the second chamber; and
the cooling apparatus further comprises a liquid inlet pipe and a liquid outlet pipe, the liquid inlet pipe and the liquid outlet pipe both pass through the partition plate, a part that is of the liquid inlet pipe and that is located in the first chamber and a part that is of the liquid outlet pipe and that is located in the first chamber are both connected to the heat dissipation channel, and a part that is of the liquid inlet pipe and that is located in the second chamber and a part that is of the liquid outlet pipe and that is located in the second chamber are both connected to the heat exchange channel of the heat exchanger.

6. The charging device according to any one of claims 2 to 4, wherein the first switch component is located above the heat exchanger and the heat exchange fan.

7. The charging device according to any one of claims 1 to 4, wherein the charging device further comprises a control apparatus, the control apparatus comprises a circuit board and a plurality of electronic components, the circuit board is fastened in the device cabinet, the circuit board is located on a side that is of the first switch component and that is away from the first cabinet door, one board surface of the circuit board faces the first cabinet door, and the plurality of electronic components are fastened to the board surface that is of the circuit board and that faces the first cabinet door.

8. The charging device according to claim 7, wherein the charging device further comprises a power supply apparatus, the power supply apparatus is electrically connected to the power supply and the circuit board, and the power supply apparatus is configured to: perform power conversion on electric energy input by the power supply, and output converted electric energy to the circuit board to supply power to the circuit board; and
the power supply apparatus is located in the device cabinet and is connected to the first side wall, and the power supply apparatus is slidable relative to the first side wall in a direction close to or away from the first cabinet door.

9. The charging device according to claim 8, wherein the charging device further comprises a second switch component and a first mounting base, an input end of the second switch component is configured to electrically connect to the power supply, and an output end of the second switch component is electrically connected to the power supply apparatus; and
the circuit board and the second switch component are both fastened to the first mounting base, the first mounting base is fastened in the device cabinet, and the first mounting base is located on the side that is of the first switch component and that is away from the first cabinet door.

10. The charging device according to any one of claims 1 to 4, wherein the charging device further comprises a second mounting base, an input metal busbar, and an output metal busbar, the second mounting base is fastened to the second side wall, the first switch component, the input metal busbar, and the output metal busbar are all fastened to the second mounting base, the input end of the first switch component is connected to the power supply through the input metal busbar, the output metal busbar is connected to the output end of the first switch component, and the part that is of the first cable and that is located in the device cabinet is connected to the output metal busbar.

11. The charging device according to any one of claims 1 to 4, wherein the charging device further comprises an electricity meter, the electricity meter is located in the device cabinet and is fastened to the first cabinet door, the first cabinet door has a window, and a display area of the electricity meter is exposed outside the device cabinet through the window.

12. The charging device according to any one of claims 1 to 4, wherein the charging device further comprises a functional member, the functional member comprises at least one of a heating apparatus, a mixed-flow fan, or an emergency stop button, and the functional member is located in the device cabinet and is fastened to the first cabinet door, wherein
the heating apparatus is configured to heat internal space of the device cabinet, the mixed-flow fan is configured to blow air into the device cabinet, and the emergency stop button is configured to control the first switch component to disconnect a circuit between the power supply and the charging connector.

13. The charging device according to claim 12, wherein the charging device further comprises a baffle plate, and the baffle plate is fastened to the first cabinet door and is located above the functional member.
